(19) Europäisches Patentamt
European Patent Office
Office européen des brevets

(11) **EP 4 198 151 A1**

(12) **EUROPEAN PATENT APPLICATION**

(43) Date of publication:
**21.06.2023 Bulletin 2023/25**

(21) Application number: **21215282.1**

(22) Date of filing: **16.12.2021**

(51) International Patent Classification (IPC):
**C22B 1/00** (2006.01)     **C22B 7/00** (2006.01)

(52) Cooperative Patent Classification (CPC):
**C22B 1/005; C22B 7/005; H01M 10/54**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Northvolt Revolt AB**
  **112 47 Stockholm (SE)**
• **Northvolt AB**
  **112 47 Stockholm (SE)**

(72) Inventors:
• **Musavi, Zari**
  **174 64 Sundbyberg (SE)**
• **Alemrajabi, Mahmood**
  **170 67 Solna (SE)**
• **Nehrenheim, Emma**
  **112 47 Stockholm (SE)**

(74) Representative: **AWA Sweden AB**
  **Box 45086**
  **104 30 Stockholm (SE)**

(54) **PROCESS FOR RECOVERING BATTERY ACTIVE MATERIAL CONCENTRATE**

(57)     The present disclosure relates to a process for recovering an active material concentrate from batteries, in particular secondary lithium-ion batteries, comprising a repeated sequence of size-reduction and material separation, to a battery active material concentrate and to a use of said battery active material concentrate in a battery manufacturing process.

**EP 4 198 151 A1**

**Fig. 1**

**Description**

TECHNICAL FIELD

The present disclosure relates to a process for recovering an active material concentrate from batteries, in particular secondary lithium-ion batteries, to a battery active material concentrate and to a use of said battery active material concentrate in a battery manufacturing process.

BACKGROUND

Rechargeable batteries, also referred to as secondary batteries, find widespread use as electrical power supplies and energy storage systems. In particular in the transportation sector, to achieve the goal of the Intergovernmental Panel on Climate Change (IPCC) to limit global warming to 1.5°C, electric vehicles (EVs) powered by renewable energy have been tapped as the primary means to achieve decarbonization. As a result of the push from policymakers and global awareness, the number of electric vehicles bought and used worldwide will significantly increase in the next years and, as a consequence thereof, also the number of batteries at their end of life will significantly rise considering a typical life span of 10 years.

As lithium-ion batteries contain several elements, such as lithium, copper, aluminum and NCM metals (nickel, cobalt and manganese), which are valuable, in particularly considering the increasing demand for secondary batteries on the one side, and the scarcity of resources and the difficult mining conditions on the other side, recycling of spent lithium-ion batteries is imperative to meeting the IPCC goal, but also in view of saving resources, minimizing pollution and lowering overall battery costs.

The recycling of batteries commonly starts by sorting waste batteries according to their size, form and chemical composition, and then crushing or shredding them, which terms are uses interchangeably herein. The shredded battery material then passes through a series of filters and separation stages to separate off plastic and metal shreds. The shredding and filtering process finally results in a product called "black mass", which mainly contains electrolyte and shredded or crushed cathode and anode materials. The obtained black mass can then be used as the raw material in a subsequent process of recovering the anode and cathode active materials, which process commonly follows a sequence of hydro- or pyrometallurgy, metal extraction and product preparation.

Considering the increasing demand for metals used in batteries, in particular secondary lithium-ion batteries, and a growing sensibility towards environmental issues, there is considerable demand for an economical and environmentally friendly process for efficiently recovering the active materials from batteries.

SUMMARY

In view of this demand for economical and environmentally friendly processes for efficiently recovering the active materials from batteries, it is an object of the present disclosure to provide a process for recovering an active material concentrate from batteries, in particular secondary lithium-ion batteries, which allows for increased liberation and recovery of valuable electrode active materials from batteries, in particular cathode active materials such as lithium, nickel, cobalt and manganese, from secondary lithium-ion batteries.

It is further an object to provide a process for recovering an active material concentrate from batteries, in particular secondary lithium-ion batteries, in which batteries of variant size ranges, different forms and different structural components can be easily recycled at the same time.

It is further an object of the present disclosure to provide an active material concentrate, which is a high-quality mixture that contains all the valuable electrode active materials from batteries, in particularly secondary lithium-ion batteries, recovered at high yield, in particular lithium, nickel, cobalt and manganese, and contains unfavored materials at controlled impurity levels, and which can be used in a battery manufacturing process.

One or more of these objects may be solved by a process for recovering an active material concentrate from batteries, a battery active material concentrate and a use of a battery active material concentrate according to the independent claims. The independent claims and the dependent claims can be combined in any technologically suitable and sensible way, providing further embodiments of the invention.

In accordance with the present disclosure, there is provided a process for recovering an active material concentrate from batteries, preferably lithium-ion batteries, more preferably secondary lithium-ion batteries, the process comprising:

- a first size-reduction stage of processing one or more batteries to form a size-reduced material;

- a first separation stage of separating off from the size-reduced material a fine material with particle size of less than

250 μm to isolate a first fine material and a first coarse material;

- a second size-reduction stage of processing the first coarse material to form a size-reduced coarse material;

- a second separation stage of separating off from the size-reduced coarse material a fine material with particle size of less than 200 μm to isolate a second fine material and a second coarse material;

- combining the isolated fine materials to obtain the active material concentrate.

The present inventors surprisingly found that the repeated sequence of size-reduction of the battery/battery material and material separation results in increased liberation and controlled separation of the electrode active materials from the rest of the (undesired) battery components. The process of the present disclosure allows for efficient and increased recovery of valuable electrode active materials, for example electrode active materials from secondary lithium-ion batteries such as lithium, nickel, cobalt and manganese, regardless of the types, forms, sizes and different structural components of the batteries to be recycled and used as the raw material of the process.

The present disclosure further provides for a battery active material concentrate, which comprises Li and one or more of Co, Ni and Mn in a total amount of more than 20 wt.%, based on the total weight of the battery active material concentrate, and which is preferably obtained or obtainable by a battery recycling process, more preferably by the process of the present disclosure.

The present disclosure further provides for a use of the battery active material concentrate of the present disclosure in a battery manufacturing process, in particular a process for manufacturing a secondary lithium-ion battery.

BRIEF DESCRIPTION OF THE DRAWINGS

Different aspects are now described with reference to the accompanying drawings. The accompanying drawing in the following description shows merely some embodiments of the present disclosure, and a person of ordinary skill in the art may still derive other embodiments from this accompanying drawing without creative efforts.

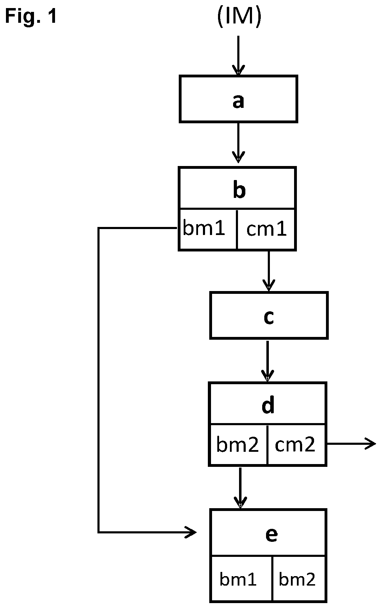

Fig. 1 is a schematic flowchart illustrating a process for recovering an active material concentrate from batteries according to an embodiment of the present disclosure. In size-reduction step (a), the one or more batteries used as a raw or input material (IM) for recovering the active material concentrate are shredded to form a size-reduced battery material. Preferably, the resultant size-reduced, shredded battery material is screened to a maximum size of particles of 25 mm or less. The shredding may be carried out under inert environment. The size-reduced, shredded battery material is then screened in separation step (b) to separate off from the size-reduced battery material the fine material with particle size of less than 250 μm (bm1), for example by using a vibrating screen with appropriate opening size (i.e., opening diameter < 250 μm). In separation step (b) the size-reduced, shredded battery material is separated in order to obtain a first fine material of fine particles having a maximum particle size of less than 250 μm (bm1), which comprises anode and cathode active materials contained in the one or more batteries used as the input material (IM), and a first coarse material of residual oversized particles (cm1) that cannot pass through the screen. The isolated first fine material (bm1) forms a part of the active material concentrate. The coarse material (cm1) remaining after separating off fine material (bm1) is subjected to a further size-reduction in step (c), preferably by milling using a ball mill, for further liberation of electrode active materials. Another screening is then carried out in step (d), to separate off from the size-reduced coarse material (cm1) the fine material with particle size of less than 200 μm (bm2), for example by using a vibrating screen with appropriate opening size (i.e., opening diameter < 200 μm). In separation step (d), the size-reduced, shredded battery material is separated in order to obtain a second fine material of fine particles having a maximum particle size of less than 200 μm (bm2) which comprises anode and cathode active materials contained in the one or more batteries used as the input material (IM), and a second coarse material of residual oversized particles (cm2) that cannot pass through the screen. The isolated second fine material (bm2) forms a part of the active material concentrate. The second coarse material (cm2) remaining after separating off the second fine material (bm2) may be discarded. Isolated fine materials bm1 and bm2 are then combined in step (e) to thereby obtain the active material concentrate. For example, in case one or more secondary lithium-ion batteries are used as the input material (IM), the obtained active material concentrate includes cobalt, nickel and/or manganese, lithium and graphite, without being limited thereto, and may additionally include one or more of organics and salts from the electrolyte, iron, aluminum, copper, and zinc as impurities, without being limited thereto.

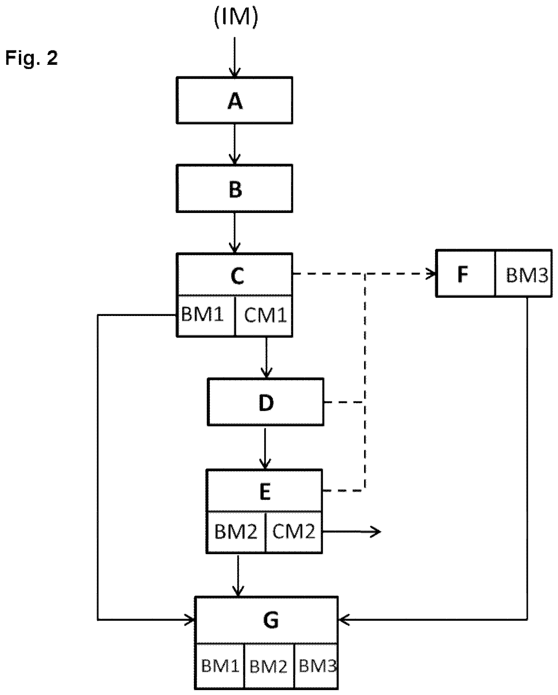

Fig. 2 is a schematic flowchart illustrating a process for recovering an active material concentrate from batteries according to another embodiment of the present disclosure. In size-reduction step (A), the one or more batteries used as a raw or input material (IM) for recovering the active material concentrate are shredded to form a size-reduced battery material. Preferably, the resultant size-reduced, shredded battery material is screened to a maximum size of particles of 25 mm or less. The shredding may be carried out under inert environment. The size-reduced, shredded battery material is then subjected to a drying step (B), to lower the moisture content of the size-reduced, shredded battery material to below 10 %, based on the total moisture contained in the IM, preferably by vacuum evaporation. After the drying, the size-reduced, shredded battery material is screened in separation step (C) to separate off from the size-reduced battery material the fine material with particle size of less than 250 $\mu$m (BM1), for example by using a vibrating screen with appropriate opening size (i.e., opening diameter < 250 $\mu$m). In separation step (C) the size-reduced, shredded battery material is separated in order to obtain a first fine material of fine particles having a maximum particle size of less than 250 $\mu$m (BM1), which comprises anode and cathode active materials contained in the one or more batteries used as the input material (IM), and a first coarse material of residual oversized particles (CM1) that cannot pass through the screen. The isolated first fine material (BM1) forms a part of the active material concentrate. The coarse material (CM1) remaining after separating off fine material (BM1) is subjected to a further size-reduction in step (D), preferably by milling using a ball mill, for further liberation of electrode active materials. Another screening is then carried out in step (E) to separate off from the size-reduced coarse material (CM1) the fine material with particle size of less than 200 $\mu$m (BM2), for example by using a vibrating screen with appropriate opening size (i.e., opening diameter < 200 $\mu$m). In separation step (E), the size-reduced, shredded battery material is separated in order to obtain a second fine material of fine particles having a maximum particle size of less than 200 $\mu$m (BM2), which comprises anode and cathode active materials contained in the one or more batteries used as the input material (IM), and a second coarse material of residual oversized particles (CM2) that cannot pass through the screen. The isolated second fine material (BM2) forms a part of the active material concentrate. The second coarse material (CM2) remaining after separating off the second fine material (BM2) may be discarded. In separation step (F), combined residual battery materials recovered from steps (C), (D) and (E) (i.e., material loss form steps C, D and E) is screened to separate off from the combined residual materials the fine material with particle size of less than 160 $\mu$m (BM3), for example by using a vibrating screen with appropriate opening size (i.e., opening diameter < 160 $\mu$m). In separation step (F), a third fine material of fine particles having a maximum particle size of less than 160 $\mu$m (BM3) is isolated, which comprises anode and cathode active materials contained in the one or more batteries used as the input material (IM) and forms a part of the active material concentrate. Isolated fine materials BM1, BM2 and BM3 are then combined in step G to thereby obtain the active material concentrate. For example, in case one or more secondary lithium-ion batteries are used as the input material (IM), the obtained active material concentrate includes cobalt, nickel and/or manganese, lithium and graphite, without being limited thereto, and may additionally include one or more of organics and salts from the electrolyte, iron, aluminum, copper, and zinc as impurities, without being limited thereto.

## DETAILED DESCRIPTION

Within the framework of this application, the term "battery" is intended to include a battery cell, a battery module, which typically contains a plurality of battery cells, and a battery pack, which typically contains a plurality of battery modules. Further, within the framework of this application, the term "battery" is intended to include both disposable and rechargeable (also referred to as "secondary") batteries.

Battery cells, or simply "cells", in general comprise an anode, a cathode, a separator and an electrolyte. The electrolyte acts as a conductor allowing ions to move between the positive electrode (cathode) and the negative electrode (anode) and in the reverse in an oxidation and reduction reaction, respectively. Secondary lithium-ion batteries (LIBs) are a type of rechargeable battery in which lithium ions move from the anode to the cathode during discharge. Furthermore, a battery cell typically comprises a casing for housing the electrodes, the separator and the electrolyte, current collectors or terminals and various safety devices, such as polymer gaskets, vents or valves. The positive terminal is connected to the cathode, e.g. by an aluminum tab, whereas the negative terminal is connected, e.g. by a copper tab, to the anode. Accordingly, LIBs comprise many different materials, in particular plastic and metal that makes up its housing, the cathode and anode materials, the separator and the electrolyte.

One aspect of the present disclosure provides for a process for recovering an active material concentrate from batteries, wherein the process comprises, preferably in this sequence:

- a first size-reduction stage of processing one or more batteries to form a size-reduced material;

- a first separation stage of separating off from the size-reduced material a fine material with particle size of less than 250 $\mu$m to isolate a first fine material and a first coarse material;

- a second size-reduction stage of processing the first coarse material to form a size-reduced coarse material;

- a second separation stage of separating off from the size-reduced coarse material a fine material with particle size of less than 200 $\mu$m to isolate a second fine material and a second coarse material;

- combining the isolated fine materials to obtain the active material concentrate.

In a preferred embodiment of the process of the present disclosure, the one or more batteries in the first size-reduction stage, also referred to herein as the "raw material" for recovering the active material concentrate, are selected from lithium-ion batteries, more preferably secondary lithium-ion batteries.

Secondary lithium-ion batteries in principle have four key components which define the inner materials of the battery: i) The positive electrode (cathode), ii) the negative electrode (anode), iii) the electrolyte and iv) the separator.

In secondary lithium-ion batteries, lithium transition metal composite oxides including nickel (Ni), cobalt (Co) and/or manganese (Mn) (so-called "NCM metals") or lithium iron phosphate ($LiFePO_4$) are typically used as the cathode material, which is the primary active component of the cathode and is intercalated on a cathode backing foil/current collector made of, for example, aluminum. Common examples of lithium transition metal composite oxides are lithium cobalt oxide ($LiCoO_2$), lithium nickel oxide ($LiNiO_2$), lithium manganese oxide ($LiMn_2O_4$), lithium nickel cobalt oxide ($LiNi_xCo_{1-x}O_2$ ($0<x<1$) or $LiNi_{1-x-y}Co_xAl_yO_2$ (($0<x\leq0.2$, $0<y\leq0.1$)) as well as lithium nickel cobalt manganese (NCM) oxide ($LiNi_{1-x-y}Co_xMn_yO_2$ ($0<x+y<1$)).

Within the framework of this application, the term "active material" should be understood to include the cathode active materials as well as the anode active materials contained in a battery.

Within the framework of this application, the term "cathode active material" should be understood to describe the materials or metals that constitute the primary active component of the cathode in a battery, including lithium. Accordingly, in case a lithium transition metal composite oxide is used as the cathode material, the cathode active material comprises lithium and one or more selected from NCM metals Ni, Co and Mn as active metals at a desired target ratio/target composition, wherein the molar ratio Li : NCM metal(s) is typically near 1.

Further, within the framework of this application, the term "anode active material" should be understood to describe the materials or metals that constitute the primary active component of the anode in a battery. Typically, secondary lithium-ion batteries use graphite powder as an anode active material, which is intercalated on an anode backing foil/current collector made of, for example, copper. However, the term "anode active material" as used herein should be understood to comprise natural and artificial graphite, activated carbon, carbon black, conductive additives, lithium titanate (LTO), surface functionalized silicon, and high-performance powdered graphene, without being limited thereto.

The electrolyte of secondary lithium-ion batteries is liquid and typically contains lithium hexafluorophosphate ($LiPF_6$), lithium tetrafluoroborate ($LiBF_4$), lithium perchlorate ($LiClO_4$), lithium trifluoromethanesulfonate ($LiCF_3SO_3$), lithium bis((bistrifluoromethanesulphonyl) (LiTFSI), lithium organoborates, or lithium fluoroalkylphosphates dissolved in an organic solvent, for example, mixtures of alkyl carbonates, e.g. $C_1$-$C_6$ alkyl carbonates such as ethylene carbonate (EC), ethyl methyl carbonate (EMC), dimethyl carbonate (DMC), diethyl carbonate (DEC), propylene carbonate (PC).

As the separator between the cathode and anode, a polymer- and/or ceramic-based separator is typically used.

Accordingly, in the present disclosure the terms "active material concentrate" and "battery active material concentrate" are intended to describe a mixture of crushed or shredded inner battery materials after the removal of plastic and solid metal parts, which may be obtained from a battery recycling process, or may be obtained as the final output after a sequence of size-reduction and separating stages of one or more batteries used as the raw material in the process of the present disclosure. In embodiments of the present disclosure, the (battery) active material concentrate corresponds to the crushed battery material commonly called "black mass". Within the framework of this application, the (battery) active material concentrate mainly contains cathode and anode active materials, and its composition will vary depending on the one or more batteries used as the raw material. For example, in case the one or more batteries used as the raw material in the process of the present disclosure are selected from secondary lithium-ion batteries, the active material concentrate mainly includes cobalt, nickel and/or manganese, lithium and graphite, without being limited thereto, and may additionally include in lower amounts one or more of organics and salts from the electrolyte, iron, aluminum, copper, and zinc as impurities, without being limited thereto.

The total amount of active materials, i.e., cathode and anode active materials, present in a battery in general is known from manufacturer specifications. Accordingly, the total amount of active materials contained in the one or more batteries used as the raw material for recovering the active material concentrate in the process of the present disclosure, referred to herein as the "input active material", can easily be determined or can be calculated by dismantling a battery in advance of a recovery process.

In the process for recovering an active material concentrate from batteries according to the present disclosure, one or more batteries are processed in a first size-reduction stage to form a size-reduced material, which necessarily includes all the battery materials present in the one or more batteries used as the raw material, such as organics and salts from the electrolyte, iron, aluminum, copper, zinc, graphite, cobalt, nickel, manganese and lithium, in the case of secondary lithium-ion batteries, but also plastic and metal that makes up its housing etc.

Processing may comprise shredding, crushing or milling the one or more batteries in order to obtain a size-reduced battery material. The device and method for processing the one or more batteries to form the size-reduced material is not particularly limited. Any device suitable for shredding, crushing or milling batteries and battery materials known to those skilled in the art can be used as desired. In a preferred embodiment, in the first size-reduction stage the processing of the one or more batteries to form the size-reduced material comprises shredding the one or more batteries using a shredding device. For example, the shredding may include one- or two-stage shredding, and each shredder may be a one-, two- or four-shaft shredder as desired.

Also, the type of batteries used as the raw material for recovering the active material concentrate is not particularly limited, and all types of batteries, including but not limited to cylindrical batteries, coin batteries, pouch-type batteries and prismatic batteries, may be simultaneously used as the raw material and fed to the first size-reduction stage for shredding, and moreover in variant size ranges, different forms/shapes and with different structural components as desired.

In a preferred embodiment of the process of this disclosure, the size-reduced material formed in the first size-reduction stage has a maximum particle size of 25 mm or less, preferably 20 mm or less, but preferably 16 mm or more. As used herein, "particle size" in each case is related to the smallest diameter of the individual particles.

Maximum particle size of the size-reduced material obtained may be controlled and determined by any method known to a person skilled in the art. Preferably, the resultant size-reduced material is screened, sieved or filtered to separate off the material having a particle size of 25 mm or less, preferably 20 mm or less, but preferably 16 mm or more, using a screen, sieve or filter with a corresponding mesh size or opening size of 25 mm or less, preferably 20 mm or less, but preferably 16 mm or more.

Particularly preferably, the processing of the one or more batteries in the first size-reduction stage comprises shredding, crushing or milling the one or more batteries and then screening, sieving or filtering the formed size-reduced material to a maximum particle size of 25 mm or less, preferably 20 mm or less, but preferably 16 mm or more, and more preferably by using a screen, sieve or filter with a mesh size or opening size of 25 mm or less, preferably 20 mm or less, but preferably more than 16 mm. Circular openings or meshes are preferably used, and "opening size" or "mesh size" refers to the diameter.

By processing the one or more batteries to form a size-reduced material of such maximum particle size, on the one side a maximum liberation of valuable active materials from the cathode and anode can be achieved and the yield of recovered cathode and anode active materials from the one or more batteries used as the raw material in the process of the present disclosure the can be increased. On the other side, plastic and solid metal parts of this particle size can be easily separated and removed in the subsequent separation stages that will be explained below.

In a further preferred embodiment, to obtain the size-reduced material said processing of the one or more batteries in the first size-reduction stage is carried out under inert environment, i.e., in an inert atmosphere using an inert, nonoxidizing gas, preferably nitrogen, argon or carbon dioxide, or under cryogenic environment, preferably at temperatures below -170°C, or said processing of the one or more batteries in the first size-reduction stage is carried out under inert and cryogenic environment. Alternatively, said processing of the one or more batteries in the first size-reduction stage may be carried out under water. By this, the risk of self-ignition or explosion of a battery during shredding can be decreased, thereby minimizing the risk of causing damage to people and the recycling facility.

In a preferred embodiment of the process of the present disclosure, a drying step is carried out before the first separation stage to remove liquid components contained in the one or more batteries used as the raw material and to reduce a moisture content of the size-reduced battery material, preferably to a moisture content of below 10 %, more preferably below 4 %, even more preferably below 2 %, and particularly preferably below 1 %.

Within the framework of the present application, "moisture content" is intended to mean the total moisture of the one or more batteries used as the raw material for recovering the active material concentrate (corresponding to 100 % moisture content), and "moisture" mainly includes the liquid organic components of the electrolyte. Accordingly, in this drying step, mainly the liquid organic components of the electrolyte, in particular volatile organic components (VOC), are removed from the size-reduced battery material, while the moisture remaining after the drying mostly includes non-volatile organic components of the electrolyte or electrolyte components that can hardly be extracted. The liquid components removed in the drying step may be discarded or collected for recycling.

The drying may be carried out before or after the first size-reduction stage, but is preferably carried out after the first size-reduction stage. Therefore, in a further preferred embodiment, the process of the present disclosure comprises, before the first separation stage, drying the size-reduced battery material to a moisture content of below 10 %, more preferably below 4 %, even more preferably below 2 %, and particularly preferably below 1 %. Setting the moisture content of the size-reduced battery material to such a low rate allows for effective separation of the dried size-reduced material in subsequent separation stages described below. At the same time, the content of impurities in the active material concentrate obtained by the process of the present disclosure can be reduced.

According to the present disclosure, the moisture content (%) of the size-reduced battery material is determined by means of a standard method known to those skilled in the art using a moisture analyzer (Moisture analyzer HC103, manufacturer: METTLER TOLEDO) that determines the moisture content of a sample with the loss on drying (LOD) principle according to the formula:

$$\text{Moisture content (\%) =} \quad ((\text{wet weight of the sample} - \text{dry weight of the sample})/\text{wet weight of the sample}) \times 100\%.$$

The method and device for drying the batteries or the size-reduced material are not particular limited, as long as the above-defined moisture content can be achieved, and methods such as evaporation or pyrolysis may be applied for the drying as desired.

Therefore, in a further preferred embodiment of the process of this disclosure, the drying of the one or more batteries or of the size-reduced material is carried out by an evaporation method, such as vacuum evaporation, or by pyrolysis at elevated temperature, in particular between 130°C and 500°C, to break down organic molecules. From the viewpoint of energy consumption and process simplification, vacuum evaporation is particularly preferred, and in particular at a temperature of 200°C or less, preferably 150°C or less, but preferably 60°C or more, and at an absolute pressure of 300 mbar or less, preferably 100 mbar or less, more preferably 50 mbar or less, but preferably 30 mbar or more.

Therefore, in a still further preferred embodiment, said drying of the one or more batteries or of the size-reduced material is carried out by vacuum evaporation at a temperature of 200°C or less, preferably 150°C or less, but preferably 60°C or more, and at an absolute pressure of 300 mbar or less, preferably 100 mbar or less, more preferably 50 mbar or less, but preferably 30 mbar or more.

The equipment for carrying out evaporation or pyrolysis is not particularly limited, and any device known in the art may be used as desired. For example, horizontal or vertical paddle dryers may preferably be applied for vacuum evaporation.

The process for recovering an active material concentrate from batteries according to the present disclosure further comprises a first separation stage of separating off from the size-reduced material a fine material with particle size of less than 250 $\mu$m, preferably less than 200 $\mu$m, more preferably less than 100 $\mu$m, to isolate a first fine material and a first coarse material. By this stage, a first fine material of fine particles having a maximum particle size of less than 250 $\mu$m, preferably less than 200 $\mu$m, more preferably less than 100 $\mu$m is obtained. As used herein, "particle size" is related to the smallest diameter of the individual particles.

The method and device for separating and isolating the first fine material from the size-reduced material in the first separation stage is not particularly limited, and any particle separation device known to a person skilled in the art can be selected as desired. Preferably according to the method of the present disclosure, separation in this stage is carried out by one-step, two-step or multi-step screening, sieving or filtering the size-reduced material, preferably using a screen, sieve or filter having a mesh size or opening size of less than 250 $\mu$m, less than 200 $\mu$m and less than 100 $\mu$m, respectively. Circular openings or meshes are preferably used here, and "opening size" or "mesh size" refers to the diameter. Therefore, in a preferred embodiment, the first fine material is the material separated from the size-reduced material by screening, sieving or filtering using a screen, sieve or filter having a mesh size or opening size of less than 250 $\mu$m, less than 200 $\mu$m and less than 100 $\mu$m, respectively. For example, a swinging vibrating screening device may be used to separate off the first fine material from the size-reduced material. Therefore, in a further preferred embodiment of the process, the first separation stage comprises separating off the fine material with particle size of less than 250 $\mu$m, preferably less than 200 $\mu$m, more preferably less than 100 $\mu$m, from the size-reduced material by screening, particularly preferably using a vibrating screen having the respective mesh size of less than 250 $\mu$m, 200 $\mu$m or 100 $\mu$m.

Separating off from the size-reduced material the fine material with particle size of less than 250 $\mu$m, preferably less than 200 $\mu$m, more preferably less than 100 $\mu$m, in the first separation stage may result in a fine material of particles with a uniform particle size distribution of d90 being in the range of 35 $\mu$m to 70 $\mu$m (i.e., d90 = 35 $\mu$m, 36 $\mu$m, 37 $\mu$m, [...], 68 $\mu$m, 69 $\mu$m, or 70 $\mu$m). That is, a first fine material is obtained and isolated in the first separation stage, which may have a particle size distribution of d90 being in the range of 35 $\mu$m to 70 $\mu$m.

According to the present disclosure, the particle size distribution (d90) in each case is determined by means of laser diffraction (LD), which method is known to those skilled in the art, using a commercially available particle size analyzer (Manufacturer: Malvern Panalytical).

In the first separation stage, the size-reduced battery material formed in the first size-reduction stage is separated into two fractions, that is, the first fine material fraction of the isolated first fine material, which comprises anode and cathode active materials contained in the one or more batteries used as the raw material and forms a part of the active material concentrate recovered in the process of the present disclosure, and the isolated first coarse material fraction of residual oversized particles that cannot pass through the screen, sieve or filter applied. For example, in case the one or more batteries used as the raw material in the process of the present disclosure are selected from secondary lithium-ion batteries, the first fine material includes active materials cobalt, nickel and/or manganese, lithium and graphite, without being limited thereto, and may additionally include one or more of organics and salts from the electrolyte, iron, aluminum, copper, and zinc as impurities, without being limited thereto.

An amount of the first fine material separated and isolated in the first separation stage may be in the range of 40 to 80 wt.%, based on a total weight of the input active material.

Further, an active material recovery rate (%) in the first separation stage defined by the formula

$$\text{recovery rate (\%)} = (\text{total amount of active material separated off in the first separation stage})/(\text{total amount of input active material}) \times 100 \%$$

may be in the range of 50 to 80 %.

For example, in case the one or more batteries in the process of the present disclosure are selected from secondary lithium-ion batteries, the active material includes lithium (Li) and one or more of cobalt (Co), nickel (Ni) and manganese (Mn), preferably Li, Co, Ni and Mn.

According to the process for recovering an active material concentrate from batteries of the present disclosure, the first coarse material isolated in the first separation stage, which remains after separating off the first fine material, is then processed in a second size-reduction stage to form a size-reduced coarse material. By subjecting the first coarse material to the second size-reduction, further liberation and thus recovery of electrode active materials contained in the one or more batteries used as the raw material in the process of the present disclosure can be achieved, thereby increasing the recovery rate of valuable active materials, for example active materials Li, Co, Ni and Mn in the case of secondary lithium-ion batteries.

Processing may comprise shredding, crushing or milling the first coarse material in order to obtain the size-reduced coarse material. The method and device for processing the first coarse material to form the size-reduced coarse material is not particularly limited, and any shredding, crushing or milling device known to those skilled in the art may be used as desired. In a preferred embodiment, the processing in the second size-reduction stage to form the size-reduced coarse material comprises milling the first coarse material isolated in the first separation stage using a ball mill.

The process for recovering an active material concentrate from batteries according to the present disclosure further comprises a second separation stage of separating off from the size-reduced coarse material a fine material with particle size of less than 200 μm, preferably less than 160 μm, more preferably less than 80 μm, to isolate a second fine material and a second coarse material, in which a second fine material is separated off from the size-reduced coarse material. By this stage, a second fine material of fine particles having a particle size of less than 200 μm, preferably less than 160 μm, more preferably less than 80 μm is obtained. As used herein, the particle size is related to the smallest diameter of the individual particles.

The method and device for separating and isolating the second fine material from the size-reduced coarse material in the second separation stage is not particularly limited, and any particle separation device known to a person skilled in the art can be selected as desired. Preferably according to the method of the present disclosure, separation in this stage is carried out by one-step, two-step or multi-step screening, sieving or filtering the size-reduced coarse material, preferably using a screen, sieve or filter having a mesh size or opening size of less than 200 μm, less than 160 μm and less than 80 μm, respectively. Circular openings or meshes are preferably used here, and "opening size" or "mesh size" refers to the diameter. Therefore, in a preferred embodiment, the second fine material is the material separated from the size-reduced material by screening, sieving or filtering using a screen, sieve or filter having a mesh size or opening size of less than 200 μm, less than 160 μm and less than 80 μm, respectively. For example, a swinging vibrating screening device may be used to separate off the second fine material from the size-reduced coarse material. Therefore, in a further preferred embodiment of the process, the second separation stage comprises separating off the fine material with particle size of less than 200 μm, preferably less than 160 μm, more preferably less than 80 μm, from the size-reduced coarse material by screening, particularly preferably using a vibrating screen having the respective mesh size of less than 200 μm, 160 μm or 80 μm.

Separating off from the size-reduced coarse material the fine material with particle size of less than 200 μm, preferably less than 160 μm, more preferably less than 80 μm, may result in a fine material of particles with a uniform particle size distribution of d90 being in the range of 30 μm to 40 μm (i.e., d90 = 30 μm, 31 μm, 32 μm, 33 μm, 34 μm, 35 μm, 36 μm, 37 μm, 38 μm, 39 μm, or 40 μm). That is, a second fine material is obtained and isolated in the second separation stage, which may have a particle size distribution of d90 being in the range of 30 μm to 40 μm.

In the second separation stage, the size-reduced coarse material formed in the second size-reduction stage is separated into two fractions, that is, the second fine material fraction of the isolated second fine material, which comprises anode and cathode active materials contained in the one or more batteries used as the raw material and forms a part of the active material concentrate recovered in the process of the present disclosure, and the isolated second coarse material fraction of residual oversized particles that cannot pass through the screen, sieve or filter applied. For example, in case the one or more batteries used as the raw material in the process of the present disclosure are selected from secondary lithium-ion batteries, the second fine material includes cobalt, nickel and/or manganese, lithium and graphite, without being limited thereto, and may additionally include one or more of organics and salts from the electrolyte, iron, aluminum, copper, and zinc as impurities, without being limited thereto.

An amount of the second fine material isolated in the second separation stage may be in the range of 10 to 50 wt.%, based on a total weight of the input active material. Further, an active material recovery rate (%) in the second separation stage defined by the formula

$$\text{recovery rate (\%)} = \text{(total amount of active material separated off in the second separation stage)/(total amount of input active material)} \times 100\ \%$$

may be in the range of 10 to 30 %.

For example, in case the one or more batteries in the process of the present disclosure are selected from secondary lithium-ion batteries, the active material includes lithium (Li) and one or more of Co, Ni and Mn, preferably Li, Co, Ni and Mn.

By combining the isolated first fine material and the isolated second fine material according to the process for recovering an active material concentrate from batteries of the present disclosure, the active material concentrate is obtained, which comprises the anode and cathode active materials contained in the one or more batteries used as the raw material. For example, in case the one or more batteries used as the raw material in the process of the present disclosure are selected from secondary lithium-ion batteries, the active material concentrate includes cobalt, nickel and/or manganese, lithium and graphite, without being limited thereto, and may additionally include one or more of organics and salts from the electrolyte, iron, aluminum, copper, and zinc as impurities, without being limited thereto.

Therefore, an amount of the first fine material in the obtained active material concentrate may be in the range from 40 to 80 wt.%, and an amount of the second fine material in the obtained active material concentrate may be in the range from 10 to 50 wt.%, each based on the total weight of input active material.

During the first and second separation stages and during the second size-reduction stage, a certain amount of valuable active material may get lost, in particular in the device(s) respectively used for separating off the first and second fine materials and for processing the first coarse material to form a size-reduced coarse material, in particular, because the light fine material tends to adhere for example at inner walls of the device(s), and/or tends to accumulate in cavities and the like.

Therefore, in order to further increase the yield of recovered cathode and anode active materials and to further increase the cathode active material recovery rate, the residual material (i.e., the material loss) recovered from the stages may be combined, and a further separation of separating off from the combined residual materials a fine material with particle size of less than 160 $\mu$m, preferably less than 100 $\mu$m, more preferably less than 60 $\mu$m, may be carried out, to isolate a third fine material. By this stage, a third fine material of fine particles having a particle size of less than 160 $\mu$m, preferably less than 100 $\mu$m, more preferably less than 80 $\mu$m, may optionally be obtained. The "particle size" here is related to the smallest diameter of the individual particles.

Therefore, in a preferred embodiment of the process of this disclosure, the process further comprises, preferably after the second separation stage,

- combining a residual material recovered from the first separation stage, a residual material recovered from the second size-reduction stage and a residual material recovered from the second separation stage, and

- a third separation stage of separating off from the combined residual materials a fine material with particle size of less than 160 $\mu$m, preferably less than 100 $\mu$m, more preferably less than 60 $\mu$m, to isolate a third fine material.

In the third separation stage, a third fine material can be isolated as a further fraction, which comprises anode and cathode active materials contained in the one or more batteries used as the raw material and forms a part of the active material concentrate recovered in the process of the present disclosure. For example, in case the one or more batteries used as the raw material in the process of the present disclosure are selected from secondary lithium-ion batteries, the third fine material includes cobalt, nickel and/or manganese, lithium and graphite, without being limited thereto, and may additionally include one or more of organics and salts from the electrolyte, iron, aluminum, copper, and zinc as impurities, without being limited thereto.

The method and device for separating and isolating the third fine material from the combined residual materials in the third separation stage is not particularly limited, and any particle separation device known to a person skilled in the art can be selected as desired. Preferably according to this embodiment of the present disclosure, separation in this stage is carried out by one-step, two-step or multi-step screening, sieving or filtering the combined residual materials, preferably using a screen, sieve or filter having a mesh size or opening size of less than 160 $\mu$m, less than 100 $\mu$m and less than 60 $\mu$m, respectively. Circular openings or meshes are preferably used here, and "opening size" or "mesh size" refers to the diameter. Therefore, in a further preferred embodiment, the third fine material is the material separated from the combined residual materials by screening, sieving or filtering using a screen, sieve or filter having a mesh size or opening size of less than 160 μm, less than 100 μm and less than 60 μm, respectively. For example, a swinging vibrating screening device may be used to separate off the third fine material from the combined residual materials. Therefore, in a still further preferred embodiment of the process, the third separation stage comprises separating off the fine material with particle size of less than 160 μm, preferably less than 100 μm, more preferably less than 60 μm, from the combined residual materials by screening, particularly preferably using a vibrating screen having the respective mesh size of less than 160 μm, 100 μm or 60 μm.

Separating off from the combined residual materials recovered from the first and second separation stages and the second size-reduction stage the fine material with particle size of less than 160 μm, preferably less than 100 μm, more preferably less than 60 μm, may result in a fine material of particles with a uniform particle size distribution of d90 being in the range of 15 μm to 35 μm (i.e., d90 = 15 μm, 16 μm, 17 μm, [...], 33 μm, 34 μm, or 35 μm). That is, a third fine material obtained and isolated in the third separation stage may have a particle size distribution of d90 being in the range of 15 μm to 35 μm.

Preferably according to this embodiment, an amount of the third fine material isolated in the third separation stage may be in the range of 3 to 15 wt.%, based on a total weight of the input active material.

Further preferably according to this embodiment, an active material recovery rate (%) in the third separation stage defined by the formula

$$\text{recovery rate (\%)} = (\text{total amount of active material separated off in the third}$$
$$\text{separation stage})/(\text{total amount of input active material}) \times 100 \text{ \%}$$

may be in the range of 5 to 20 %.

For example, in case the one or more batteries in the process of the present disclosure are selected from secondary lithium-ion batteries, the active material includes Li and one or more of Co, Ni and Mn, preferably Li, Co, Ni and Mn.

Further preferably according to this embodiment, the isolated third fine material is mixed with the isolated first and second fine materials to obtain the active material concentrate, which comprises anode and cathode active materials contained in the one or more batteries used as the raw material in the process of the present disclosure. For example, in case the one or more batteries used as the raw material in the process of the present disclosure are selected from secondary lithium-ion batteries, the active material concentrate includes cobalt, nickel and/or manganese, lithium and graphite, without being limited thereto, and may additionally include one or more of organics and salts from the electrolyte, iron, aluminum, copper, and zinc as impurities, without being limited thereto.

Therefore, according to this preferred embodiment of the process of the present disclosure, an amount of the first fine material in the obtained active material concentrate may be in the range from 40 to 80 wt.%, and an amount of the second fine material in the obtained active material concentrate may be in the range from 10 to 50 wt.%, and an amount of the third fine material in the obtained active material concentrate may be in the range from 3 to 15 wt.%, each based on the total weight of the input active material.

The total active material recovery rate (%) of the process of the present disclosure defined by the formula

$$\text{recovery rate (\%)} = (\text{total amount of active materials separated off in all separation}$$
$$\text{stages})/(\text{total amount of input active material}) \times 100 \text{ \%}$$

advantageously may be 95 % or more.

Further preferably, in the active material concentrate obtainable or obtained by the process of the present disclosure the total amount of active material Li and one or more of Co, Ni and Mn, more preferably Li, Co, Ni and Mn, advantageously may be more than 20 wt.%, preferably more than 30 wt.%, and particularly preferably more than 34 wt.%, based on the total weight of the obtained active material concentrate.

That is, the process according to the present disclosure for recovering an active material concentrate from batteries, in particular secondary lithium-ion batteries, advantageously allows for efficient liberation and recovery of valuable electrode active materials and for controlled liberation and recovery with regard to size distribution of valuable electrode active materials, in particular cathode active materials such as lithium, nickel, cobalt and manganese, regardless of the types, forms, sizes and different structural components of the batteries to be recycled and used as the raw material of the process.

Further, the active material concentrate obtainable or obtained by the process of the present disclosure may have a uniform particle size distribution of d90 of less than 70 μm. Such uniform particle size distribution is advantageous in terms of maximum liberation of the desired active materials from the battery components. At the same time, such particle size distribution can advantageously be achieved with the optimum relationship between energy input and yield of desired active materials. In addition, such uniform particle size distribution makes the material handling and storage easier, and reduces the tendency of caking in long term storage.

Further, in the active material concentrate obtainable or obtained by the process of the present disclosure, a total amount of impurities preferably including, but not limited to, one or more of aluminum (Al), copper (Cu), iron (Fe), zinc (Zn) and residual electrolyte components, but not including carbon/graphite (C), advantageously may be less than 5 wt.%, preferably less than 1 wt.%, based on the total weight of the obtained active material concentrate.

Further advantageously, in the active material concentrate obtainable or obtained by the process of the present disclosure a ratio "total amount of active material" to "total amount of impurities except carbon/graphite" advantageously may be 7.5 or more, preferably 11 or more, more preferably 20 or more, and even more preferably 30 or more, wherein the active materials preferably are Li and one or more of Co, Ni and Mn, more preferably Li, Co, Ni and Mn, and wherein the impurities preferably include one or more of aluminum (Al), copper (Cu), iron (Fe), zinc (Zn) and residual electrolyte components, without being limited thereto.

The repeated sequence of size-reduction of the battery/battery material and material separation of specific particle sizes according to the process of the present disclosure allows for increased liberation of the electrode active materials from the rest of the battery components and controlled separation of these materials from the battery components. Due to the increased amount of liberated and recovered electrode active material in the isolated fine material fractions, the level of impurities in the combined concentrate can be controlled and kept low. Keeping the amount of unfavored materials such as Al, Cu, Fe and Zn at such low impurity levels compared to the valuable active materials facilitates the process of removing these unfavored metals in a subsequent process for producing a cathode material precursor and, thus, reduces the total water balance and consumption of chemicals in the manufacturing of lithium-ion batteries.

Further advantageously, the active material concentrate obtainable or obtained by the process of the present disclosure has a bulk density in the range of 1.0 to 1.2 $g/cm^3$, and/or a tapped density in the range of 1.2 to 1.7 $g/cm^3$, each determined according to standard methods (ISO 3953).

The active material concentrate obtainable or obtained by the process of the present disclosure having the above-outlined advantageous properties is a high-quality mixture which contains all the valuable electrode active materials from batteries, in particularly secondary lithium-ion batteries, recovered at high yield, in particular valuable active materials such as lithium, nickel, cobalt and manganese, and which contains unfavored materials, such as Al, Cu, Fe and Zn at controlled impurity levels. The thus obtained active material concentrate advantageously can be used in a subsequent process for manufacturing a cathode material precursor in the manufacturing of batteries, in particular secondary lithium-ion batteries.

In another aspect the present disclosure provides for a battery active material concentrate, which comprises active materials lithium (Li) and one or more of cobalt (Co), nickel (Ni) and manganese (Mn), preferably Li, Co, Ni and Mn, in a total amount of more than 20 wt.%, preferably more than 30 wt.%, and particularly preferably more than 34 wt.%, based on the total weight of the battery active material concentrate. The battery active material concentrate according to this aspect of the present disclosure may additionally comprise graphite, iron (Fe), aluminum (al), copper (Cu) and zinc (Zn), without being limited thereto.

A battery active material concentrate with such a high content of active materials Li and one or more of Co, Ni and Mn, preferably Li, Co, Ni and Mn is particularly suitable for being used in a process for manufacturing lithium-ion batteries, because it allows for cost-saving and resource-saving production of a cathode active material precursor for use in lithium-ion batteries, in particular secondary lithium-ion batteries.

In a preferred embodiment of the battery active material concentrate according this aspect of the present disclosure, the active material concentrate has a uniform particle size distribution of d90 of less than 70 μm. Such uniform particle size distribution is advantageous in terms of process kinetics and allows for higher efficiency in a subsequent process for manufacturing a cathode material precursor. In addition, such uniform particle size distribution makes the material handling and storage easier, and reduces the tendency of caking in long term storage.

In a further preferred embodiment of the battery active material concentrate according to this aspect of the present disclosure, a total amount of impurities including one or more of aluminum (Al), copper (Cu), iron (Fe), zinc (Zn) and residual electrolyte components, but not including carbon/graphite (C), is less than 5 wt.%, preferably less than 1 wt.%, based on the total weight of the active material concentrate.

Further preferably, in the battery active material concentrate according to this aspect of the present disclosure a ratio "total amount of active material" to "total amount of impurities except carbon/graphite" in the battery active material concentrate is 7.5 or more, preferably 11 or more, more preferably 20 or more, and even more preferably 30 or more, wherein the active materials are Li and one or more of Co, Ni and Mn, preferably Li, Co, Ni and Mn, and wherein the impurities include one or more of aluminum (Al), copper (Cu), iron (Fe), zinc (Zn) and residual electrolyte components, without being limited thereto.

When the amount of unfavored materials such as Al, Cu, Fe and Zn is this low in comparison to the valuable electrode active materials, the process of removing these unfavored metals in a subsequent process for producing a cathode material precursor or battery is facilitated, and thus the total water balance and consumption of chemicals in the manufacturing of batteries can be reduced.

In a preferred embodiment, the battery active material concentrate according to this aspect of the present disclosure has a bulk density in the range of 1.0 to 1.2 g/cm$^3$, and/or a tapped density in the range of 1.2 to 1.7 g/cm$^3$, each determined according to standard methods (ISO 3953).

In a further preferred embodiment, the battery active material concentrate according to this aspect of the present disclosure is a concentrate obtained or obtainable by a battery recycling process, that is, a process for the recycling of batteries and recovering the electrode materials contained in the batteries, in particular secondary lithium-ion batteries, and is more preferably a concentrate obtained or obtainable by a process for recovering an active material concentrate from batteries according to the present disclosure, which comprises:

- a first size-reduction stage of processing one or more secondary lithium-ion batteries to form a size-reduced material;

- a first separation stage of separating off from the size-reduced material a fine material with particle size of less than 250 $\mu$m preferably less than 200 $\mu$m, more preferably less than 100 $\mu$m, to isolate a first fine material and a first coarse material;

- a second size-reduction stage of processing the first coarse material to form a size-reduced coarse material;

- a second separation stage of separating off from the size-reduced coarse material a fine material with particle size of less than 200 $\mu$m, preferably less than 160 $\mu$m, more preferably less than 80 $\mu$m, to isolate a second fine material and a second coarse material; and

- combining the isolated fine materials to obtain the active material concentrate.

Further preferred embodiments of this process for recovering the battery active material concentrate according to this aspect of the present disclosure are the same as defined above.

The battery active material concentrate according to this aspect of the present disclosure having the above-outlined advantageous properties is a high-quality mixture which contains all the valuable electrode active materials of lithium-ion batteries, in particular secondary lithium-ion batteries, in high amount, i.e., nickel, cobalt and/or manganese and lithium, and which contains unfavored materials, such as Al, Cu, Fe and Zn, at controlled and low impurity levels. The battery active material concentrate according to this aspect of the present disclosure therefore can advantageously be used in a subsequent process for producing a cathode material precursor in the manufacturing of lithium-ion batteries, in particular secondary lithium-ion batteries.

Therefore, in another aspect the present disclosure provides for a use of a battery active material concentrate according to an aspect of the present disclosure, or of an active material concentrate obtainable or obtained by a process for recovering an active material concentrate from batteries according to the present disclosure, in a battery manufacturing process, in particular in a process for manufacturing a secondary lithium-ion battery, and in particular in a process for producing a cathode material precursor for use in secondary lithium-ion batteries.

Although the invention has been described above with regard to its preferred embodiments, which represent the best mode for carrying out the invention, it is understood that various changes as would be obvious to one of ordinary skill in this art can be made without departing from the scope of the disclosure, which is set forth in the appended claims.

**Claims**

1.  Process for recovering an active material concentrate from batteries, wherein the process comprises:

    - a first size-reduction stage of processing one or more batteries to form a size-reduced material;
    - a first separation stage of separating off from the size-reduced material a fine material with particle size of less than 250 $\mu$m to isolate a first fine material and a first coarse material;
    - a second size-reduction stage of processing the first coarse material to form a size-reduced coarse material;
    - a second separation stage of separating off from the size-reduced coarse material a fine material with particle size of less than 200 $\mu$m to isolate a second fine material and a second coarse material;

- combining the isolated fine materials to obtain the active material concentrate.

2.  Process according to claim 1, wherein the size-reduced material formed in the first size-reduction stage has a maximum particle size of 25 mm or less.

3.  Process according to claim 1 or 2, wherein said processing in the first size-reduction stage is carried out under inert environment and/or cryogenic environment, or is carried out under water.

4.  Process according to any one of claims 1 to 3, wherein the process further comprises drying the size-reduced material to a moisture content of below 10 % before the first separation stage.

5.  Process according to claim 4, wherein said drying of the size-reduced material is carried out by an evaporation method or by pyrolysis.

6.  Process according to claim 4 or 5, wherein said drying of the size-reduced material is carried out by vacuum evaporation at a temperature of 200°C or less and at an absolute pressure of 300 mbar or less.

7.  Process according to any one of claims 1 to 6, wherein the first fine material isolated in the first separation stage has a particle size distribution of d90 in the range of 35 $\mu$m to 70 $\mu$m, and/or wherein the second fine material isolated in the second separation stage has a particle size distribution of d90 in the range of 30 $\mu$m to 40 $\mu$m.

8.  Process according to any one of claims 1 to 7, wherein an active material recovery rate in the first separation stage is in the range of 50 to 80 %, and/or wherein an active material recovery rate in the second separation stage is in the range of 10 to 30 %.

9.  Process according to any one of claims 1 to 8, wherein an amount of the first fine material isolated in the first separation stage is in the range from 40 to 80 wt.%, and/or wherein an amount of the second fine material isolated in the second separation stage is in the range from 10 to 50 wt.%, each based on a total weight of the input active material.

10. Process according to any one of claims 1 to 9, further comprising

    - combining a residual material recovered from the first separation stage, a residual material recovered from the second size-reduction stage and a residual material recovered from the second separation stage, and
    - a third separation stage of separating off from the combined residual materials a fine material with particle size of less than 160 $\mu$m to isolate a third fine material.

11. Process according to claim 10, wherein the third fine material isolated in the third separation stage has a particle size distribution of d90 in the range of 15 $\mu$m to 35 $\mu$m.

12. Process according to claim 10 or 11, wherein an amount of the third fine material isolated in the third separation stage is in the range from 3 to 15 wt.%, based on a total weight of the input active material.

13. Process according to any one of claims 10 to 12, further comprising

    - mixing the isolated third fine material with the first and second fine materials to obtain the active material concentrate.

14. Process according to any one of claims 10 to 13, wherein the active material recovery rate in the third separation stage is in the range of 5 % to 20 %.

15. Process according to any one of claims 1 to 14, wherein the one or more batteries are selected from lithium-ion batteries, preferably secondary lithium-ion batteries.

16. Battery active material concentrate, wherein the battery active material comprises Li and one or more of Co, Ni and Mn in a total amount of more than 20 wt.%, based on the total weight of the battery active material concentrate.

17. Battery active material concentrate according to claim 16, wherein the battery active material concentrate has a particle size distribution of d90 of less than 70 μm.

18. Battery active material concentrate according to claim 16 or 17, wherein a total amount of impurities including one or more of Al, Cu, Fe, Zn and electrolyte components, but not including C, in the battery active material concentrate is less than 5 wt.%, based on the total weight of the battery active material concentrate.

19. Battery active material concentrate according to any one of claims 16 to 18, wherein a ratio of the total amount of active material to the total amount of impurities except C is 7.5 or more.

20. Battery active material concentrate according to any one of claims 16 to 19, wherein the battery active material concentrate has a bulk density in the range of 1.0 to 1.2 g/cm$^3$, and/or a tapped density in the range of 1.2 to 1.7 g/cm$^3$.

21. Battery active material concentrate according to any one of claims 16 to 20, wherein the battery active material concentrate is obtained or obtainable by a battery recycling process.

22. Battery active material concentrate according to any one of claims 16 to 21, wherein the battery active material concentrate is obtainable or obtained by a process according to any one or more of claims 1 to 15.

23. Use of a battery active material concentrate according to any one of claims 16 to 22 in a battery manufacturing process.

**Fig. 1**

(IM)

```
            ┌───────────┐
            │     a     │
            └───────────┘
                  │
                  ▼
            ┌───────────┐
            │     b     │
            ├─────┬─────┤
      ┌─────│ bm1 │ cm1 │
      │     └─────┴─────┘
      │           │
      │           ▼
      │     ┌───────────┐
      │     │     c     │
      │     └───────────┘
      │           │
      │           ▼
      │     ┌───────────┐
      │     │     d     │
      │     ├─────┬─────┤
      │     │ bm2 │ cm2 │──────▶
      │     └─────┴─────┘
      │           │
      │           ▼
      │     ┌───────────┐
      └────▶│     e     │
            ├─────┬─────┤
            │ bm1 │ bm2 │
            └─────┴─────┘
```

**Fig. 2**

Europäisches
Patentamt

European
Patent Office

Office européen
des brevets

## EUROPEAN SEARCH REPORT

Application Number

EP 21 21 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 576 216 A1 (MITSUBISHI MATERIALS CORP [JP]) 4 December 2019 (2019-12-04)<br>* abstract *<br>* paragraph [0033] *<br>* paragraph [0035] – paragraph [0037] *<br>* paragraph [0039] – paragraph [0041] *<br>* page 53 *<br>* figure 1 * | 1-15 | INV.<br>C22B1/00<br>C22B7/00 |
| X | WO 2012/169073 A1 (NIPPON MAGNETIC DRESSING [JP]; HARADA MIKIO [JP]; TOKUDA SATORU [JP]) 13 December 2012 (2012-12-13)<br>* abstract *<br>* paragraph [0028] – paragraph [0030] *<br>* figure 1 * | 1,2,15 | |
| X | WO 2021/018796 A1 (BASF SE [DE]) 4 February 2021 (2021-02-04)<br>* abstract *<br>* page 21, line 15 – line 17 *<br>* tables 2, 3 * | 16-23 | TECHNICAL FIELDS SEARCHED (IPC) |
| T | YU DAWEI ET AL: "Pretreatment options for the recycling of spent lithium-ion batteries: A comprehensive review", MINERALS ENGINEERING, ELSEVIER, AMSTERDAM, NL, vol. 173, 25 September 2021 (2021-09-25), XP086822294, ISSN: 0892-6875, DOI: 10.1016/J.MINENG.2021.107218 [retrieved on 2021-09-25]<br>* page 107218 * | | C22B |

The present search report has been drawn up for all claims

| Place of search | Date of completion of the search | Examiner |
|---|---|---|
| The Hague | 9 June 2022 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 21 21 5282**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

18

Europäisches
Patentamt

European
Patent Office

Office européen
des brevets

**LACK OF UNITY OF INVENTION
SHEET B**

Application Number

EP 21 21 5282

The Search Division considers that the present European patent application does not comply with the requirements of unity of invention and relates to several inventions or groups of inventions, namely:

**1. claims: 1-15**

    **A process for recovering an active material concentrate from batteries**

    ---

**2. claims: 16-23**

    **A battery active material concentrate**

    ---

## ANNEX TO THE EUROPEAN SEARCH REPORT
## ON EUROPEAN PATENT APPLICATION NO.

EP 21 21 5282

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2022

| Patent document cited in search report | | Publication date | Patent family member(s) | | Publication date |
|---|---|---|---|---|---|
| EP 3576216 | A1 | 04-12-2019 | CN | 110199429 A | 03-09-2019 |
| | | | EP | 3576216 A1 | 04-12-2019 |
| | | | JP | 6198027 B1 | 20-09-2017 |
| | | | JP | 2018120716 A | 02-08-2018 |
| | | | KR | 20190110543 A | 30-09-2019 |
| | | | US | 2019386354 A1 | 19-12-2019 |
| | | | WO | 2018139445 A1 | 02-08-2018 |
| WO 2012169073 | A1 | 13-12-2012 | NONE | | |
| WO 2021018796 | A1 | 04-02-2021 | AU | 2020323677 A1 | 17-02-2022 |
| | | | CA | 3144899 A1 | 04-02-2021 |
| | | | CN | 114207162 A | 18-03-2022 |
| | | | EP | 4004245 A1 | 01-06-2022 |
| | | | KR | 20220038442 A | 28-03-2022 |
| | | | TW | 202105823 A | 01-02-2021 |
| | | | WO | 2021018796 A1 | 04-02-2021 |

EPO FORM P0459

For more details about this annex : see Official Journal of the European Patent Office, No. 12/82